# EUROPÄISCHE PATENTSCHRIFT

(11) **EP 3 635 755 B1**
(45) Veröffentlichungstag und Bekanntmachung des Hinweises auf die Patenterteilung: **04.01.2023**
(21) Anmeldenummer: 18730341.7
(22) Anmeldetag: 08.06.2018
(51) Int. Cl.: H01B 13/012, B60R 16/02

(54) **KABELVERLEGEVORRICHTUNG SOWIE VERFAHREN ZUR FERTIGUNG VON KABELBÄUMEN**
CABLE-LAYING DEVICE AND METHOD FOR PRODUCING WIRING HARNESSES
DISPOSITIF DE POSE DE CÂBLES ET PROCÉDÉ DE FABRICATION DE FAISCEAUX DE CÂBLES

(30) Priorität: 09.06.2017 DE 102017209775
(43) Veröffentlichungstag der Anmeldung: 15.04.2020
(73) Patentinhaber: LEONI Bordnetz-Systeme GmbH, 97318 Kitzingen (DE)
(72) Erfinder: CHALIL, Tzeichoun, 97320 Großlangheim (DE); HOLD, Klaus, 42897 Remscheid (DE); MARTINS, Paulo, 97318 Kitzingen (DE)
(74) Vertreter: FDST Patentanwälte
(86) Internationale Anmeldenummer: PCT/EP2018/065225
(87) Internationale Veröffentlichungsnummer: WO 2018/224676

(56) Entgegenhaltungen:
- EP-A1- 0 300 141
- WO-A1-91/12708
- DE-A1-102007 024 476
- DE-A1-102015 011 822
- DE-A1-102015 119 754
- GB-A- 2 269 708
- US-A- 3 930 524

## Beschreibung

Die Erfindung betrifft eine Kabelverlegevorrichtung für die Fertigung von Kabelbäumen unterschiedlicher Typen aufweisend eine Verlegeebene zur Positionierung von Leitungen eines Kabelbaums. Außerdem betrifft die Erfindung ein Verfahren zur Fertigung von Kabelbäumen unterschiedlicher Typen mittels einer entsprechenden Kabelverlegevorrichtung.

Als Kabelbaum oder Kabelsatz wird typischerweise ein vorkonfektioniertes Leitungsbündel bezeichnet, bei dem mehrere Leitungen oder Leitungselemente zu einer Baueinheit mit einer vordefinierten und nicht selten komplexen, verzweigten Geometrie zusammengefügt sind. Ein solcher Kabelbaum wird häufig an einem sogenannten Kabelbrett oder Verlegebrett vorgefertigt und in einem nachfolgenden Herstellungsverfahren in eine Vorrichtung, also beispielsweise In ein Kraftfahrzeug, eingebaut.

Ein entsprechendes Kabelbrett ist somit eine Art Fertigungshilfe für die Fertigung von Kabelbäumen und typischerweise durch einen plattenförmigen Körper, insbesondere eine Art Tischplatte, ausgebildet, der auf einer Halterung, beispielsweise einem Gestell, ruht und an dem mehrere Halteelemente oder Fixierelemente angebracht sind. Jene Halteelemente sind dabei in der Regel fest mit dem plattenförmigen Körper verschraubt und dienen zur Vorgabe einer Geometrie oder eines Layouts für einen zu fertigenden Kabelbaum. Hierbei werden im Zuge der Fertigung eines entsprechenden Kabelbaums die einzelnen Leitungen quasi auf dem plattenförmigen Körper abgelegt, dabei entlang der Halteelemente positioniert und mit Hilfe der Halteelemente in der vorgesehenen Anordnung fixiert. Die Verlegung der Leitungen erfolgt üblicherweise manuell entsprechend einem individuellen Verlegeplan. Ein automatisiertes Verlegen ist einerseits aufgrund der biegeschlaffen Bauteile oder Baugruppen, wie zum Beispiel Leitungen, und andererseits aufgrund der großen Variantenvielfalt infolge von individuellen Ausstattungsvarianten zumindest bei Kabelbäumen für Kraftfahrzeuge nur schwer möglich.

In der DE 10 2015 119 754 A1 ist ein Verfahren zur Herstellung eines Kabelbaums beschrieben, bei dem Steckergehäuse, die auf verschiednenen Trägerplattenteilen angeordnet sind zunächst mit Kablen bestückt werden. Anschließend werden die Trägerplattenteile verfahren, sodass die Kabel quasi gestreckt und der Kabelbaum in seine finale Geometrie verbracht wird.

Ausgehend hiervon liegt der Erfindung die Aufgabe zugrunde, eine vorteilhaft ausgebildete Kabelverlegevorrichtung für die Fertigung von Kabelbäumen unterschiedlicher Typen anzugeben sowie ein vorteilhaftes Verfahren zur Fertigung von Kabelbäumen unterschiedlicher Typen mittels einer entsprechenden Kabelverle gevorrichtung.

Diese Aufgabe wird erfindungsgemäß gelöst durch eine Kabelverlegevorrichtung mit den Merkmalen des Anspruchs 1 sowie durch ein Verfahren mit den Merkmalen des Anspruchs 12. Bevorzugte Weiterbildungen sind in den rückbezogenen Ansprüchen enthalten, Die Im Hinblick auf die Kabelverlegevorrichtung angeführten Vorteile und bevorzugten Ausgestaltungen sind sinngemäß auch auf das Verfahren übertragbar und umgekehrt.

Eine entsprechende Kabelverlegevorrichtung ist dabei für die Fertigung oder Herstellung von Kabelbäumen unterschiedlicher Typen und insbesondere von Kabelbäumen für den Kraftfahrzeugbereich ausgebildet. Sie ist weiter typischerweise nach Art eines sogenannten Kabelbretts oder Verlegebretts ausgestaltet und weist eine Verlegeebene zur Positionierung von Leitungen eines Kabelbaums auf.

Ein solcher Kabelbaum weist hierbei in der Regel eine Vielzahl unterschiedlicher Leitungen auf. Bei den entsprechenden Leitungen handelt es sich beispielsweise um einzelne Adern und/oder Mantelleitungen und/oder um andere Leitungselemente, zum Beispiel vorgefertigte Leitungen mit endseitig angebrachtem Kontaktelement oder Steckverbinder. Der Begriff Leitung steht aber darüber hinaus nachfolgend stellvertretend für alle denkbaren Bauteile oder Baugruppen eines Kabelbaums, Die Leitungen sind dabei im Kabelbaum zu einer gemeinsamen Baueinheit mit vorgegebener, verzweigten Geometrie, auch Layout oder Verlegestruktur genannt, zusammengefasst. Die vorgegebene Geometrie entspricht dabei zweckdienlicherweise zumindest näherungsweise derjenigen Form oder Gestalt, die der entsprechende Kabelbaum im verbauten Zustand aufweist, also nach einem Einbau in eine dafür vorgesehene Vorrichtung, wie zum Beispiel ein Kraftfahrzeug. Unter einer verzweigten oder verästelten Struktur wird hierbei verstanden, dass Leitungsstränge oder einzelne Leitungen an unterschiedlichen Positionen des Kabelbaums von einem Hauptstrang abzweigen. Anders ausgedrückt weist ein entsprechender Kabelbaum eine Struktur ähnlich einem Baum auf.

Die für die Fertigung solcher Kabelbäume ausgebildete Kabelverlegevorrichtung weist nun eine Verlegeebene zur Positionierung von Leitungen eines Kabelbaums sowie typischerweise mehrere im Bereich der Verlegeebene positionierte Halteelemente auf, die zur zeitweisen und insbesondere punktuellen Fixierung von Leitungen eines Kabelbaums dienen und hierfür entsprechend ausgebildet sind. Hierbei werden im Zuge der Fertigung eines entsprechenden Kabelbaums die einzelnen Leitungen üblicherweise nach und nach quasi auf der Kabelverlegevorrichtung, welche üblicherweise einen plattenförmigen Grundkörper aufweist, abgelegt, dabei in der Verlegeebene sowie entlang der Halteelemente positioniert und mit Hilfe der Halteelemente in der vorgesehenen Anordnung fixiert, zumindest für die Zeit, in der der Kabelbaum gefertigt wird.

Die Verlegeebene ist dabei im Sinne dieser Anmeldung typischerweise keine streng mathematischen Ebene, sondern definiert vielmehr einen Raumbereich, innerhalb dessen die Leitungen des Kabelbaums im Zuge der Fertigung eines Kabelbaums nach und nach angeordnet und typischerweise auch fixiert werden, zumindest bis zur Fertigstellung eines entsprechenden Kabelbaums. Dieser Raumbereich kann dabei beispielsweise eine Höhe, Stärke oder Dicke von mehreren Zentimetern, beispielsweise bis 20cm aufweisen. Die Verlegeebene befindet sich hierbei typischerweise oberhalb einer Oberfläche oder Oberseite eines Grundkörpers der Kabelverlegevorrichtung, insbesondere einige Zentimeter, beispielsweise etwa 5 cm oder etwa 10 cm, oberhalb der Oberfläche oder Oberseite. Jener Grundkörper ist typischerweise eine Art Platte beispielsweise aus Holz, Metall oder einem Kunststoff, wobei die Oberfläche oder Oberseite je nach Anwendungszweck eben oder plan ist oder aber Wölbungen aufweist. Die Verlegeebene ist in der Regel eine parallel zur Oberfläche versetzte Ebene, die dieselbe Geometrie oder eine ähnliche Geometrie wie die Oberfläche oder Oberseite aufweist. Das heißt auch, dass im Zuge der Fertigung eines Kabelbaums die einzelnen Leitungen oder Elemente des Kabelbaum üblicherweise nicht auf der Oberfläche oder Oberseite des Grundkörpers abgelegt werden, sondern in der darüber liegenden Verlegeebene, wodurch zwischen der Oberfläche oder Oberseite des Grundkörpers und der darüberlegenden Verlegeebene ein Art Freiraum verbleibt.

Weiter weist die Kabelverlegevorrichtung eine Anzahl von Transporteinheiten auf, die zumindest teilautomatisiert und insbesondere vollautomatisiert entlang der Kabelverlegevorrichtung und relativ zur Verlegeebene, also insbesondere entlang der und/oder parallel zur Verlegeebene, verfahrbar sind. Die Transporteinheiten sind dabei typischerweise im zuvor genannten Freiraum angeordnet und/oder verfahrbar. Das heißt, dass diese im Falle der Nutzung in dem Zwischenraum oder in der Zwischenraumschicht zwischen der Oberfläche oder Oberseite des Grundkörpers und der Verlegeebene angeordnet sind und/oder verfahren werden. Somit ist dann eine erste Seite einer jeden Transporteinheit der Oberfläche oder Oberseite des Grundkörpers zugewandt und eine zweite, der ersten Seite gegenüberliegende Seite ist der Verlegeebene zugewandt. Eine jede Transporteinheit weist hierzu vorzugsweise ein eigenes Antriebselement für einen individuellen Antrieb der Transporteinheit auf.

Weiter hängt die Anzahl der Transporteinheiten einer Kabelverlegevorrichtung vom jeweiligen Anwendungszweck ab, wobei mehrere Transporteinheiten üblich sind. In den meisten Anwendungsfällen ist die Anzahl bevorzugt größer gleich 5, weiter bevorzugt größer gleich 10 und in einigen Fällen größer gleich 15.

Zudem ist eine Steuervorrichtung Teil der Kabelverlegevorrichtung, die zur Steuerung der Transporteinheiten eingerichtet ist. Jene Steuervorrichtung ist dabei bevorzugt als zentrale Steuereinrichtung ausgebildet und in diesem Fall sind dann alle Transporteinheiten durch die zentrale Steuervorrichtung steuerbar. Alternativ weist jede Transporteinheit eine eigene Steuereinheit auf, wobei in einem solchen Fall die Steuereinheiten der Transporteinheiten zweckdienlicherweise miteinander kommunizieren, um Kollisionen oder sonstige unerwünschte Zustände zu vermeiden. In einem solchen Fall agieren die Transporteinheiten dann ähnlich wie selbstfahrende Kraftfahrzeuge/Lastkraftwagen oder selbstfahrende Züge, wobei der Grundkörper quasi das Straßennetz oder das Schienennetz vorgibt.

Mit Hilfe einer derart ausgebildeten Kabelverlegevorrichtung lässt sich die Fertigung von Kabelbäumen vereinfachen. Dabei werden mit einer solchen Kabelverlegevorrichtung gleich zwei Lösungsansätze verfolgt, mit denen zwei unterschiedliche Nachteile von klassischen Kabelbrettern überwunden werden.

So wird ein Nachteil darin gesehen, dass klassische Kabelbretter für einen einzigen Typ Kabelbaum ausgebildet sind, sodass für jeden Typ Kabelbaum ein eigenes klassisches Kabelbrett bereitgestellt werden muss. Die verschiedenen klassischen Kabelbretter unterscheiden sich dabei im Wesentlichen hinsichtlich der Anzahl, der relativen Positionen sowie der Ausgestaltung der Halteelemente oder der Fixierelemente, die zur Positionierung und Fixierung der Leitungen eines Kabelbaums während dessen Herstellung genutzt werden. Dieser Nachteil ist bei einer hier vorgestellten Kabelverlegevorrichtung je nach Ausgestaltungsvariante nicht mehr gegeben, da sich mit Hilfe der zuvor beschriebenen Transporteinheiten eine vorkonfigurierbare oder konfigurierbare Kabelverlegevorrichtung oder ein konfigurierbares Kabelbrett realisieren lässt und dementsprechend ist die Kabelverlegevorrichtung je nach Anwendungszweck als ein solches vorkonfigurierbares oder konfigurierbares Kabelbrett ausgebildet.

In diesem Fall trägt dann zumindest eine der Transporteinheiten ein Fixierelement zur Fixierung zumindest einer Leitung und bevorzugt tragen mehrere Transporteinheiten oder aber alle Transporteinheiten jeweils ein Halteelement oder Fixierelement jeweils zur Fixierung zumindest einer Leitung. Die entsprechenden Halteelemente oder Fixierelemente sind dabei entweder unlösbar oder reversibel lösbar mit den Transporteinheiten verbunden, also beispielsweise auf die Transporteinheiten aufgeschraubt. Zweckdienlicherweise sind die Halteelemente oder Fixierelemente hierbei an den Seiten der Transporteinheiten befestigt, die von der Oberfläche oder Oberseite des Grundkörpers abgewandt und der Verlegeebene zugewandt sind.

Mit Hilfe der Halteelemente oder der Fixierelemente, die von den Transporteinheiten getragen werden, wird dann, so wie zuvor angedeutet, das Layout oder die Geometrie für einen zu fertigenden Typ Kabelbaum vorgegeben, typischerweise indem die Transporteinheiten und somit die Halteelemente oder Fixierelemente verfahren und hierdurch an Fixpositionen positioniert werden. Diese Fixpositionen geben typischerweise markante Punkte in der Geometrie des zu fertigenden Typs Kabelbaum wieder, also beispielsweise Endpunkte, insbesondere von Zweigen des Kabelbaums, oder Umlenk- oder Knickpunkte. Eine solche Wiedergabe der Geometrie eines Typs Kabelbaum durch Fixpositionen ist im Prinzip auch bei klassischen Kabelbrettern realisiert, allerdings sind die Fixpositionen bei klassischen Kabelbrettern typischerweise nicht veränderbar. Die Anzahl der Fixpositionen und/oder die relative Anordnung der Fixpositionen relativ zueinander ist dann charakteristisch für einen Typ Kabelbaum. Nach ähnlichem Prinzip wird beim Malen nach Zahlen eine Anzahl von Punkten vorgegeben, wobei durch ein Verbinden der Punkte ein Bild sichtbar wird.

Diese Fixpositionen variieren also je nach Typ Kabelbaum und daher werden die Halteelemente oder Fixierelemente im Zuge einer Konfiguration oder Vorabkonfiguration der Kabelverlegevorrichtung mit Hilfe der Transporteinheiten zwischen verschiedenen vorgegebenen Positionen verfahren, je nachdem welcher Typ Kabelbaum gerade gefertigt werden soll. Das heißt, dass durch die Transporteinheiten die Positionen der Halteelemente oder Fixierelemente variabel vorgegeben werden können und vorgegeben werden und dass auf diese Weise die Kabelverlegevorrichtung konfiguriert wird, je nachdem welcher Typ Kabelbaum gerade gefertigt werden soll. Aus diesem Lösungsansatz resultiert also insbesondere eine nachfolgend näherbeschriebene automatisiert vorkonfigurierbare oder konfigurierbare Kabelverlegevorrichtung sowie ein Verfahren zur Fertigung von Kabelbäumen mittels einer solchen Kabelverlegevorrichtung. Hierbei sei klargestellt, dass ein zuvor beschriebenes Vorkonfigurieren der Kabelverlegevorrichtung für einen Typ Kabelbaum, bei dem die Transporteinheiten und somit die Halteelemente oder Fixierelemente verfahren und hierdurch an Fixpositionen positioniert werden, vor Beginn des Zusammenbaus eines Kabelbaums des entsprechenden Typs durch Zusammenfügen von Einzelteilen wie Leitungen erfolgt, also bevor damit begonnen wird, Leitungen zu verlegen, einzusetzen und/oder an den Halteelementen bzw. den Fixierelementen zu positionieren oder zu fixieren. Dementsprechend führen die Transporteinheiten dabei insbesondere keine Leitungen mit. Die hierfür eingesetzten Transporteinheiten mit ihren Halteelementen oder Fixierelementen verbleiben dann typischerweise alle in ihren Positionen, also den Fixpositionen zumindest bis ein Kabelbaum soweit fertiggestellt ist, dass dieser als Baugruppe von der Kabelverlegevorrichtung entfernt wird.

Als Halteelemente oder Fixierelemente kommen dabei typischerweise unterschiedliche Halteelemente bzw. Fixierelemente zum Einsatz, also beispielsweise ein Typ Fixierelement für Umlenkpunkte und ein Typ Fixierelement für Endpunkte. Alternativ sind alle Halteelemente oder Fixierelemente identisch ausgebildet.

Je nach Anwendungszweck weist ein entsprechendes Fixierelement oder Halteelement hierbei zum Beispiel als Verlegehilfe ein stiftförmiges Element, ein hakenförmiges Element, eine Art Umlenkrolle, ein Halte- oder Greifelement, also beispielsweise eine Art Zange, oder ein Steckelement, also beispielsweise eine Art Buchse für einen oder mehrere Steckverbinder oder Stecker, auf.

Der zweite Lösungsansatz, der mittels der hier vorgestellten Kabelverlegevorrichtung verfolgt wird, basiert auf der Erkenntnis, dass sich die Fertigung von Kabelbäumen mittels eines klassischen Kabelbretts nicht ohne Weiteres automatisieren lässt und dass dementsprechend die meisten Arbeitsschritte manuell ausgeführt werden müssen. Mit Hilfe der Transporteinheiten lassen sich allerdings zumindest einzelne Arbeitsschritte teilautomatisieren oder automatisieren. Hierzu ist dann zumindest eine der Transporteinheiten bevorzugt durch ein Halteelement oder Fixierelement ergänzt, wobei das Halteelement bzw. Fixierelement bevorzugt als Greifelement, also beispielsweise als eine Art Zange, ausgebildet ist. Eine solche Transporteinheit mit Greifelement lässt sich beispielsweise dazu nutzen, eine Leitung, insbesondere ausgehend von einem Randbereich der Kabelverlegevorrichtung, durch Verfahren der Transporteinheit quasi in die Verlegeebene oder eine dazu parallele Ebene einzufädeln, einzuziehen oder einzuflechten und auf diese Weise schließlich in der Verlegeebene zu positionieren und gegebenenfalls zu fixieren. Das heißt, dass beispielsweise ein Ende einer Leitung vom Greifelement ergriffen wird und dass die Transporteinheit in der Folge mit diesem Ende relativ zur Verlegeebene verfährt und auf diese Weise die Leitung formt und/oder anordnet und in Position bringt. Die Transporteinheit fährt dabei zweckdienlicherweise nacheinander mehrere Fixpositionen ab und verfährt insbesondere entlang einer Bahn, entlang derer sich ein Zweig oder ein Zweigabschnitt eines fertigen Kabelbaums erstreckt. Zieht man den vorherigen Vergleich nochmals heran, ist es quasi so, als ob mehrere vorgegebene Punkte beim Malen nach Zahlen miteinander verbunden werden. Aus diesem Lösungsansatz resultiert somit insbesondere ein Verfahren zur Fertigung von Kabelbäumen, wobei Leitungen teilautomatisiert oder vollautomatisiert positioniert werden, sowie eine hierfür eingerichtete Kabelverlegevorrichtung.

Die beiden Lösungsansätze lassen sich hierbei sowohl einzeln als auch zusammen realisieren und je nach Anwendungszweck werden die beiden Lösungsansätze einzeln oder gemeinsam umgesetzt, und zwar zweckdienlicherweise durch eine entsprechend ausgebildete und/oder eingerichtete Steuervorrichtung.

Unabhängig davon, welcher der beiden Lösungsansätze oder welches der beiden Verfahren realisiert werden soll oder ob beide Lösungsansätze realisiert sind, ist die Steuervorrichtung bevorzugt derart eingerichtet, dass im Zuge der Ausführung eines Steuerprogramms zumindest eine Transporteinheit zumindest teilautomatisiert von einer vorgegebenen Startposition zu einer vorgegebenen Endposition verfahren wird und dass insbesondere mehrere Transporteinheiten nacheinander und/oder gleichzeitig im Zuge der Ausführung des Steuerprogramms automatisiert jeweils von einer vorgegebenen Startposition zu einer vorgegebenen Endposition verfahren werden. Ein entsprechendes Steuerprogramm wird hierbei zweckdienlicherweise nach einem Start oder einer Aktivierung durch einen Bediener oder Nutzer der Kabelverlegevorrichtung automatisch ausgeführt, wobei das Steuerprogramm zweckdienlicherweise hierfür in der Steuervorrichtung hinterlegt ist. Dabei sind weiter bevorzugt mehrere unterschiedliche Steuerprogramme in der Steuervorrichtung hinterlegt, aus denen ein Bediener oder Nutzer der Kabelverlegevorrichtung auswählen kann. Die Auswahl und/oder Aktivierung eines Steuerprogramms erfolgt dabei beispielsweise über ein Bedienfeld, welches Teil der Steuervorrichtung ist.

Weiter bevorzugt ist hierbei ein spezifisches Steuerprogramm für jeden Typ Kabelbaum in der Steuervorrichtung hinterlegt, wobei in diesem Fall insbesondere die vorgegebene Endposition der zumindest einen Transporteinheit und insbesondere mehrere vorgegebene Endpositionen mehrerer Transporteinheiten von Steuerprogramm zu Steuerprogramm variiert beziehungsweise variieren. Die Endpositionen entsprechen dann zweckdienlicherweise den Fixpositionen des entsprechenden Typs Kabelbaum. Ein derartiges Steuerprogramm dient dann zur Konfiguration der Kabelverlegevorrichtung für einen Typ Kabelbaum, der nachfolgend gefertigt werden soll. Mit einem solchen spezifischen Steuerprogramm wird dann also insbesondere eine spezifische Anordnung von mehreren Transporteinheiten, die jeweils ein Fixierelement tragen, realisiert, wobei dieses Anordnung nachfolgend für die Fertigung von Kabelbäumen oder zumindest eines Kabelbaums eines Typs genutzt wird. Die entsprechende Anordnung der Transporteinheiten mit den Fixierelementen wird nachfolgend also so lange beibehalten, bis ein anderer Typ Kabelbaum gefertigt werden soll und dementsprechend ein anderes spezifisches Steuerprogramm aktiviert wird.

Von Vorteil ist es weiter, wenn die vorgegebene Startposition zumindest einer der Transporteinheiten im Randbereich der Verlegeebene und insbesondere im Randbereich der Kabelverlegevorrichtung liegt. In diesem Fall entspricht die Startposition dann weiter bevorzugt einer Art Ruheposition oder Ausgangsposition, in der sich die entsprechende Transporteinheit im Ausgangszustand befindet. In diese Ruheposition oder Ausgangsposition kehrt die entsprechende Transporteinheit zudem bevorzugt im Zuge der Ausführung eines Reset-Programms, also nach Start oder Aktivierung eines Reset-Programms, zurück. Da sich diese Ruheposition oder Ausgangsposition im Randbereich der Verlegeebene und insbesondere im Randbereich der Kabelverlegevorrichtung befindet ist diese Position typischerweise für einen Bediener oder Nutzer der Kabelverlegevorrichtung gut zugänglich, sodass sich die Transporteinheit hier beispielsweise mit einem Fixierelement bestücken lässt. Alternativ lässt sich hier das Fixierelement, das die Transporteinheit trägt, austauschen oder es lässt sich beispielsweise eine Leitung am Fixierelement fixieren, insbesondere, um diese dann nachfolgend durch Verfahren der Transporteinheit in die Verlegeebene oder eine dazu parallele Ebene einzufädeln.

In vorteilhafter Weiterbildung liegen die Startpositionen mehrerer und insbesondere aller Transporteinheiten im Randbereich, also typischerweise im selben Randbereich, der Verlegeebene und insbesondere im Randbereich der Kabelverlegevorrichtung.

Weiter ist es günstig, wenn die Steuervorrichtung derart eingerichtet ist, dass im Zuge der Ausführung eines Steuerprogramms, also nach Start oder Aktivierung eines entsprechenden Steuerprogramms, zumindest eine der Transporteinheiten entlang einer vorgegebenen Bahn von einer vorgegebenen Startposition zu einer vorgegebenen Endposition verfahren wird. Dabei entspricht weiter bevorzugt zumindest ein Teil der Bahn, also eine Teilstrecke der Bahn, in guter Näherung einem Teil eines vorgesehenen Verlegeweges, also einer Teilstrecke eines vorgesehenen Verlegeweges, oder dem vollen vorgesehenen Verlegeweg einer Leitung eines Kabelbaums. Die Transporteinheit fährt dabei zweckdienlicherweise nacheinander mehrere Fixpositionen ab und verfährt insbesondere entlang einer Bahn, entlang derer sich ein Zweig oder ein Zweigabschnitt eines fertigen Kabelbaums erstreck oder die zumindest denselben Verlauf aufweist. Ein derartiges Steuerprogramm dient dann insbesondere zur Teilautomatisierung oder Vollautomatisierung der Positionierung von Leitungen eines Kabelbaums, also dem Einfädeln von Leitungen in die Verlegeebene oder eine dazu parallele Ebene im Zuge der Fertigung eines Kabelbaums.

Steuerprogramme der zuvor beschriebenen Art lassen sich weiter bevorzugt auch nachträglich in der Steuervorrichtung hinterlegen, wobei die Steuervorrichtung hierfür insbesondere programmierbar ist.

Zudem weist die Steuervorrichtung und/oder eine jede Steuereinrichtung einer jeden Transporteinheit vorteilhafterweise eine Positionserkennungs-Vorrichtung auf, mit deren Hilfe die Positionen der Transporteinheiten erfasst, erkannt oder bestimmt werden können, sodass auf der Basis der entsprechenden Daten eine Steuerung der Transporteinheiten erfolgen kann und erfolgt. Eine entsprechende Positionserkennungs-Vorrichtung weist dabei beispielsweise eine Sensoreinheit auf, welche als optischer Sensor ausgebildet ist oder welche auf einer Induktionsschleifen-Technik, NFC-Technik, RFID-Technik oder einer Laser-Technik basiert.

Von Vorteil ist es des Weiteren, wenn die Transporteinheiten zwangsgeführt sind. Eine entsprechende Zwangsführung lässt sich dabei beispielsweise mittels eines Führungsrasters realisieren, entlang dessen die Transporteinheiten verfahrbar sind. Das Führungsraster ist beispielsweise als mechanisches Schienensystem ausgeführt. Alternativ sind die Transporteinheiten zum Beispiel mit Hilfe eines magnetischen oder elektromagnetischen Systems, also beispielsweise nach dem Prinzip einer Magnetschwebebahn, verfahrbar. Weiter ist das Führungsraster bevorzugt in einen plattenförmigen Grundkörper der Kabelverlegevorrichtung integriert oder in einem plattenförmigen Grundkörper versenkt angeordnet.

Dieser Grundkörper bzw. die Kabelverlegevorrichtung allgemein ist vorzugsweise zumindest im Wesentlichen horizontal oder exakt horizontal ausgerichtet. Unter zumindest im Wesentlichen horizontal wird eine Neigung bezüglich der Horizontalen beispielsweise um bis maximal 45° oder bis maximal 30° verstanden.

Alternativ sind die Transporteinheiten relativ zur Verlegeebene und insbesondere entlang der Verlegeebene im Wesentlichen frei verfahrbar und weisen hierfür beispielsweise Räder für ein Rollen über die Oberseite oder Oberfläche des Grundkörpers auf oder sind nach Art von im Wesentlichen frei auf der Kabelverlegevorrichtung und insbesondere über die Oberseite oder Oberfläche des Grundkörpers verfahrbaren Gleit- oder Schwebeeinheiten, beispielsweise basierend auf einer Luftkissentechnik, ausgebildet und bevorzugt als Magnetschwebekissen ausgestaltet.

Für das Verfahren der Transporteinheiten ist in zweckdienlicher Ausgestaltung ein elektromagnetisches Antriebssystem ausgebildet, welches zur Erzeugung von entlang der Kabelverlegevorrichtung propagierenden Magnetfeldern und zum magnetischen Antrieb der Transporteinheiten ausgebildet ist. Hierzu umfasst das Antriebssystem eine Vielzahl von ansteuerbaren Elektromagneten, die insbesondere an der Kabelverlegevorrichtung angeordnet, insbesondere in den Grundkörper integriert sind. Korrespondierend hierzu weisen die Transporteinheiten Magnete, insbesondere Permanentmagnete, auf. Zur Erzeugung der wandernden oder propagierenden Magnetfelder werden die Elektromagnete durch eine geeignete Ansteuerung entlang eines gewünschten Verfahrweges sukzessive umgepolt, so dass auf eine jeweilige Transporteinheit eine magnetische Antriebskraft entlang des gewünschten Verfahrweges ausgeübt wird. Die Ansteuerung erfolgt durch die Steuervorrichtung. Insgesamt ist hierdurch ein im Wesentlichen freies, individuelles und unabhängiges Verfahren der einzelnen Transporteinheiten beispielsweise nach Art von Magnetschwebekissen oder einer Magnetschwebebahn ermöglicht. Die Elektromagnete sind dabei insbesondere in einem Raster verteilt angeordnet. Die Transporteinheiten sind neben der Magnetführung vorzugsweise nicht weiter (mechanisch) geführt.

Gemäß einer weiteren Ausführungsvariante sind die Transporteinheiten dabei in einer Transportebene verfahrbar, die zur Verlegeebene versetzt angeordnet ist, insbesondere parallel dazu. Jene Transportebene befindet sich dabei bevorzugt in dem zuvor beschriebenen Freiraum zwischen der Verlegeebene und der Oberseite oder Oberfläche des Grundkörpers. Diese Ausführungsvariante ist insbesondere dann von Vorteil, wenn mit Hilfe der Transporteinheiten oder zumindest mit Hilfe einer Transporteinheit Leitungen verlegt oder eingefädelt werden sollen. In diesem Fall erfolgt dann vorzugsweise zunächst eine Positionierung und Ausrichtung einer Leitung mittels der Transporteinheit in der Transportebene und nachfolgend wird diese Leitung dann mit dieser Ausrichtung, also unter Beibehaltung der vorgegebenen Form oder des vorgegebenen Verlaufs, in die Verlegeebene überführt oder in der Verlegeebene abgesetzt oder abgelegt und fixiert. Hierbei ist die Transportebene oder vielmehr die Transportschicht weiter bevorzugt zwischen der Oberfläche eines plattenförmigen Grundkörpers der Kabelverlegevorrichtung und der Verlegeebene angeordnet.

Außerdem weist die Kabelverlegevorrichtung in einigen Fällen eine Testvorrichtung auf, die insbesondere Teil der Steuervorrichtung ist. Jene Testvorrichtung weist dann typischerweise Testanschlüsse oder Prüfanschlüsse für zumindest eine Leitung des Kabelbaums und insbesondere alle Leitungen des Kabelbaums auf, mit deren Hilfe sich zum Beispiel ein Funktionstest oder Bordnetztest durchführen lässt. Ein entsprechender Funktionstest oder Bordnetztest wird dabei typischerweise zum Abschluss der Herstellung eines Kabelbaums durchgeführt, also bevor dieser dann von der Kabelverlegevorrichtung entfernt und schließlich in eine dafür vorgesehene Vorrichtung eingebaut wird. Einer Ausgestaltungsvariante entsprechend ist dabei die Testvorrichtung oder ein Teil der Testvorrichtung auf einer Transporteinheit angeordnet oder es sind Teile der Testvorrichtung auf mehreren Transporteinheiten angeordnet, sodass diese mittels der Transporteinheit bzw. der Transporteinheiten verfahrbar ist bzw. verfahrbar sind. Hierbei sind insbesondere Testanschlüsse oder Prüfanschlüsse auf Transporteinheiten angeordnet, die im Rahmen der Konfiguration der Kabelverlegevorrichtung an für den Typ Kabelbaum spezifische Positionen verfahren werden.

Ausführungsbeispiele der Erfindung werden nachfolgend anhand einer schematischen Zeichnung näher erläutert. Darin zeigen:
- FIG 1: in einer Draufsicht ein Kabelbrett mit Transporteinheiten in einem Randbereich,
- FIG 2: in der Draufsicht das Kabelbrett mit den Transporteinheiten nach einer Konfiguration,
- FIG 3: in der Draufsicht das Kabelbrett mit den Transporteinheiten nach der Konfiguration und ein darauf gefertigter Kabelbaum sowie
- FIG 4: in einer ausschnittsweisen Seitenansicht das Kabelbrett nach der Konfiguration und während der Fertigung des Kabelbaums.

Einander entsprechende Teile sind in allen Figuren jeweils mit den gleichen Bezugszeichen versehen.

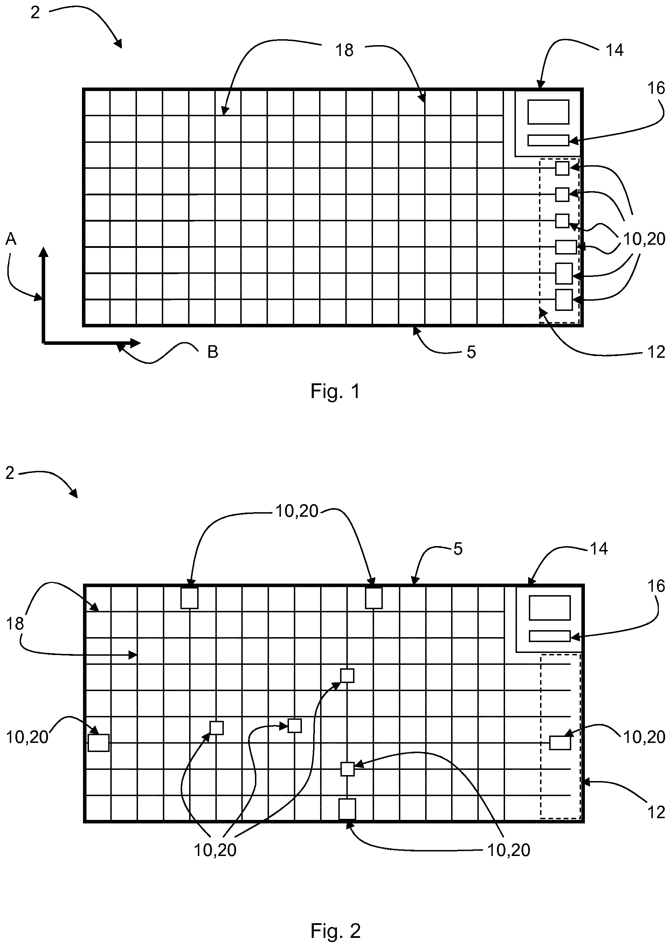

Eine nachfolgend exemplarisch beschriebene und in Fig. 1 skizziertes Kabelverlegevorrichtung ist nach Art eines Kabelbretts 2 ausgestaltet sowie für die Fertigung von Kabelbäumen 4 unterschiedlicher Typen ausgebildet und wird dementsprechend auch hierfür eingesetzt. Die Kabelbäume 4 werden dabei mit Hilfe des Kabelbretts 2, auch Verlegebrett genannt, vorgefertigt und dann im Rahmen eines Fertigungsprozesses für eine Vorrichtung in eine Vorrichtung, beispielsweise ein Kraftfahrzeug, eingebaut.

Das Kabelbrett 2 weist hierbei einen plattenförmigen oder brettartigen Grundkörper 5 auf, der auf einem nicht näher dargestellten Gestell ruht und dessen Oberfläche oder Oberseite im Wesentlichen horizontal oder leicht verkippt dazu ausgerichtet ist. In einem Bereich oberhalb dieser Oberfläche oder Oberseite befindet sich eine Verlegeebene 6, in der im Zuge der Fertigung eines Kabelbaums 4 Leitungen 8 des Kabelbaums 4 positioniert und typischerweise für die weitere Fertigung fixiert werden. Hierbei liegen in der Regel einzelne Leitungen 8 zumindest abschnittsweise auf dem Kabelbrett 2 auf und dementsprechend werden Kabelbäume 4 auf dem Kabelbrett 2 quasi liegend gefertigt.

Weiter ist das Kabelbrett 2 im Ausführungsbeispiel als automatisch konfigurierbares Kabelbrett 2 ausgebildet, welches sich vor der Fertigung von Kabelbäumen 4 eines Typs für den entsprechenden Typ konfigurieren lässt und auch für den entsprechenden Typ konfiguriert wird. Dazu werden mehrere Transporteinheiten 10, die in einem Ausgangszustand in einem Randbereich 12 des Kabelbretts 2 angeordnet sind, gesteuert durch eine Steuervorrichtung 14 vollautomatisch relativ zur Verlegeebene 6 verfahren.

Hierbei weist die Steuervorrichtung 14 ein Bedienfeld 16 auf, über welches ein Nutzer einen Typ Kabelbaum 4 auswählen und hierdurch ein damit korreliertes Programm starten kann. Im Ausführungsbeispiel ist die Steuervorrichtung 14 und/oder das Bedienfeld direkt in den Grundkörper 5 integriert. Alternativ sind diese Elemente in einer getrennt vom Grundkörper 5 angeordneten Steuerstation angeordnet. Ist ein entsprechendes Programm gestartet, so wird eine vorgegebene Anzahl Transporteinheiten 10 automatisch jeweils von einer vorgegebenen Startposition zu einer vorgegebenen Endposition verfahren, wobei die vorgegebenen Startpositionen im Ausgangszustand im Randbereich 12 liegen und wobei die Anzahl der Transporteinheiten 10 sowie die vorgegebenen Endpositionen der Transporteinheiten 10 von Typ Kabelbaum 4 zu Typ Kabelbaum 4 variieren. Das heißt, dass für jeden Typ Kabelbaum 4 eine Anzahl an Transporteinheiten 10 sowie entsprechende Endpositionen für die Transporteinheiten 10 vorgegeben sind. Haben die Transporteinheiten 10 dann ihre vorgegebenen Endpositionen erreicht, so ist die Konfiguration für den entsprechenden Typ Kabelbaum 4 abgeschlossen. Diese Situation ist in Fig. 2 angedeutet.

Hierbei entsprechen die Endpositionen Fixierpositionen und diese Fixpositionen geben typischerweise markante Punkte in der Geometrie des zu fertigenden Typs Kabelbaum 4 wieder, also beispielsweise Endpunkte, insbesondere von Zweigen des Kabelbaums 4, oder Umlenk- oder Knickpunkte. Eine solche Wiedergabe der Geometrie eines Typs Kabelbaum 4 durch Fixpositionen ist im Prinzip auch bei klassischen Kabelbrettern realisiert, allerdings sind die Fixpositionen bei klassischen Kabelbrettern typischerweise nicht veränderbar.

Weiter ist das Kabelbrett 2 derart ausgestaltet, dass die Transporteinheiten 10 selbst in zwei linear unabhängigen Richtungen A,B verfahrbar sind, wobei insbesondere jede Transporteinheit 10 unabhängig von den übrigen sowie relativ zu den übrigen Transporteinheiten 10 in die zwei linear unabhängigen Richtungen A,B verfahrbar ist. Die Transporteinheiten 10 lassen sich somit zum Beispiel nacheinander verfahren, das heißt, dass die zweite Transporteinheit 10 erst dann verfahren wird, wenn die erste Transporteinheit 10 ihre vorgegebene Endposition erreicht hat und so weiter.

Hierbei sind die Transporteinheiten 10 im Ausführungsbeispiel vorzugsweise mit Hilfe eines hier nicht näher dargestellten elektromagnetischen Antriebssystems verfahrbar. Speziell sind die Transporteinheiten nach Art von Magnetschwebekissen ausgebildet. Hierzu ist im Grundkörper 5 eine Vielzahl von ansteuerbaren Elektromagneten zur Erzeugung eines wandernden Magnetfeldes angeordnet und in den Transporteinheiten sind weitere Magnete, insbesondere Elektromagnete, angeordnet. Die Transporteinheiten 10 sind dadurch entlang eines gewünschten Verfahrweges und entlang des Kabelbretts 2 verfahrbar. Die Ansteuerung der Elektromagnete erfolgt daher entsprechend dem ausgewählten Typ des Kabelbaums 4.

Die Transporteinheiten 10 sind vorzugsweise entlang eines Führungsrasters 18 verfahrbar. Jenes Führungsraster 18 ist dabei in den plattenförmigen Grundkörper integriert oder eingelassen und somit quasi unter der Oberfläche angeordnet. Hierbei ist das Führungsraster 18 beispielsweise durch eine Rasteranordnung der Elektromagnete gegeben oder auch durch sich kreuzende Leiterbahnen oder Leiterstreifen ausgebildet.

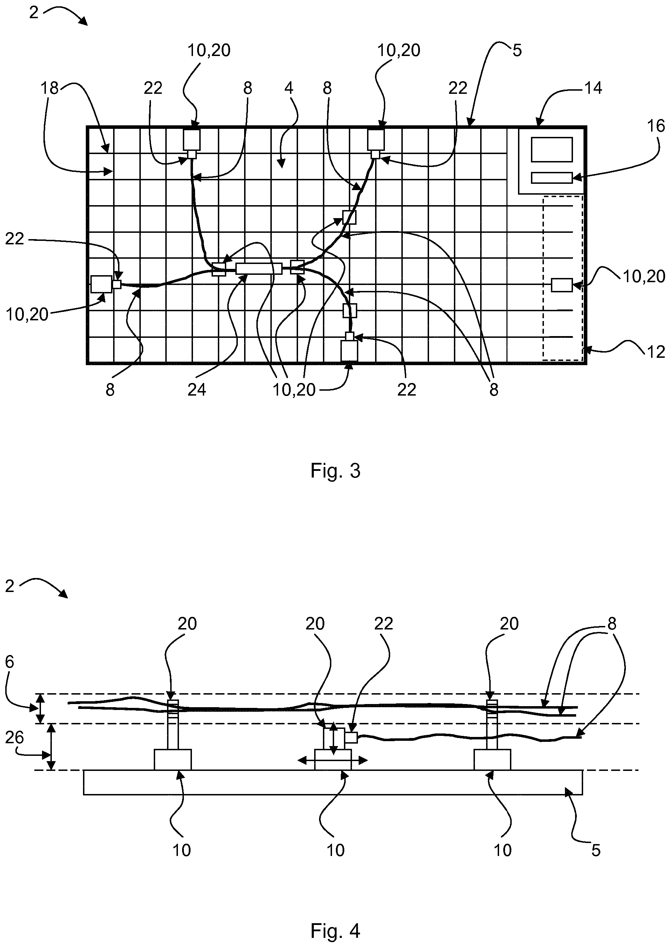

Jede dieser Transporteinheiten 10, die im Rahmen der Konfiguration des Kabelbretts 2 verfahren werden, trägt weiter ein Fixierelement oder ein Halteelement 20, das zum Beispiel als Verlegehilfe ausgebildet ist. Im einfachsten Fall ist ein solches Halteelement 20 dabei als einfaches Umlenkelement, wie beispielsweise ein Stift, ausgestaltet. Hierbei dienen die Halteelemente 20 im Rahmen der Fertigung von Kabelbäumen 4 zur zeitweisen und insbesondere punktuellen Fixierung von Leitungen 8 des Kabelbaums 4, sodass sich mit Hilfe der Halteelemente 20 eine Verlegegeometrie für die Leitungen 8 eines Kabelbaums 4 vorgeben lässt. Diese Situation ist in Fig. 3 angedeutet.

In dieser Darstellung ist ein teilweise gefertigter Kabelbaum 4 gezeigt, dessen Leitungen 8 in einer vorgesehenen Verlegegeometrie auf dem Kabelbrett 2 angeordnet sind und die in diesem Zustand zumindest punktuell mittels der Halteelemente 20 fixiert sind. Im Falle der im Mittenbereich positionierten Transporteinheiten 10 sind die Halteelemente 20 dabei als einfache Umlenkelemente ausgebildet, wo hingegen die randseitig am Kabelbrett 2 positionierten Transporteinheiten 10 Halteelemente 20 tragen, die beispielsweise als Gegensteckverbinder ausgebildet sind. In diese Gegensteckverbinder sind gemäß Fig. 3 Steckverbinder 22 eingesteckt, die endseitig an den Leitungen 8 angebracht sind. In einer solchen Situation, in der zumindest einige Leitungen 8 des Kabelbaums 4 in einer vorgesehenen Verlegegeometrie angeordnet sind, erfolgt typischerweise ein Fertigungsschritt, bei dem Leitungen 8 aneinander fixiert werden, beispielsweise durch eine Bandagierung 24, wie sie in Fig. 3 angedeutet ist.

Ist schließlich die Fertigung eines Kabelbaums 4 abgeschlossen, so wird dieser vom Kabelbrett 2 entfernt, sodass sich dann ein weiterer Kabelbaum 4 desselben Typs fertigen lässt. Soll hingegen nachfolgend ein anderer Typ Kabelbaum 4 gefertigt werden, so ist eine erneute Konfiguration des Kabelbretts 2 notwendig, die wiederum durch Starten eines entsprechenden Programms von einem Nutzer initiiert werden kann.

Einem weiteren Ausführungsbeispiel entsprechend werden die Transporteinheiten 10 nicht nur zur Konfiguration des Kabelbretts 2 vor dem Zusammensetzen von Einzelteilen zur Fertigung von Kabelbäumen 4 genutzt, sondern darüber hinaus auch zum automatisierten Verlegen der Leitungen 8 eines Kabelbaums 4 auf dem Kabelbrett 2 im Zuge der Fertigung eines Kabelbaums 4. Dazu wird zumindest eine Transporteinheit 10 im Randbereich 12 mit einer Leitung 8 bestückt. Nachfolgend wird diese Transporteinheit 10 automatisch, also gesteuert durch die Steuervorrichtung 14, entlang einer vorgegebenen Bahn zu einer vorgegebenen Endposition verfahren, wobei die Bahn entlang eines Teils eines vorgesehenen Verlegeweges oder entlang eines vorgesehenen Verlegeweges einer der Leitungen 8 des Kabelbaums 4 verläuft. Das heißt, dass mit Hilfe dieser Transporteinheit 10 eine Leitung 8 quasi eingefädelt und entsprechend der vorgesehenen Verlegegeometrie in der Verlegeebene 6 positioniert wird.

Hierzu weist die entsprechende Transporteinheit 10 zweckdienlicherweise ein Halteelement 20 auf, das beispielsweise als Gegensteckverbinder oder als ein Greifelement ausgebildet ist, sodass sich ein Ende einer Leitung 8 an dem entsprechenden Halteelement 20 fixieren lässt. Dieses Ende wird dann beim Verfahren der Transporteinheit 10 mitgeführt und auf diese Weise wird dann die entsprechende Leitung 8 eingefädelt und verlegt. Auf diese Weise lassen sich dann mehrere oder alle Leitungen 8 des Kabelbaums 4 automatisiert auf dem Kabelbrett 2 anordnen, sodass auch das Verlegen der Leitungen 8 im Wesentlichen vollautomatisch erfolgt.

Ist eine zumindest teilautomatisierte Verlegung von Leitungen 8 vorgesehen, so ist es zudem günstig, wenn die Leitungen 8 in einer Grundebene oder Transportebene 26 eingefädelt und angeordnet werden und nachfolgend in der Verlege-ebene 6 abgelegt sowie fixiert werden. Die Transportebene 26 ist dabei beispielsweise zwischen der Oberfläche des Grundkörpers des Kabelbretts 2 und der Verlegeebene 6 positioniert und dementsprechend wird dann eine Leitung 8 durch ein paralleles Verschieben von der Oberfläche des Grundkörpers weg in die Verlegeebene 6 hineinplatziert und somit in der Verlegeebene 6 abgelegt. Eine derartige räumliche Trennung des Bereichs, in dem die Leitungen 8 zeitweise gehalten werden, also der Verlegeebene 6, und dem Bereich, der für das Einfädeln und Ausrichten der Leitungen 8 vorgesehen ist, also der Transportebene 26, ist dabei vor allem bei Kabelbäumen 4 mit sehr vielen Leitungen 8 von Vorteil. Eine entsprechende Situation ist in Fig. 4 wiedergegeben.

Die Erfindung ist nicht auf das vorstehend beschriebene Ausführungsbeispiel beschränkt.

### Bezugszeichenliste

- 2: Kabelbrett
- 4: Kabelbaum
- 5: Grundkörper
- 6: Verlegeebene
- 8: Leitung
- 10: Transporteinheit
- 12: Randbereich
- 14: Steuervorrichtung
- 16: Bedienfeld
- 18: Führungsraster
- 20: Halteelement
- 22: Steckverbinder
- 24: Bandagierung
- 26: Transportebene

- A: Richtung
- B: Richtung

## Patentansprüche

1. Kabelverlegevorrichtung (2) für die Fertigung von Kabelbäumen (4) unterschiedlicher Typen aufweisend eine Verlegeebene (6) zur Positionierung von Leitungen (8) eines Kabelbaums (4), sowie eine Anzahl von Transporteinheiten (10), die zumindest teilautomatisiert relativ zur Verlegeebene (6) verfahrbar sind, und eine Steuervorrichtung (14), die zur Steuerung der Transporteinheiten (10) eingerichtet ist.
**dadurch gekennzeichnet dass**
zumindest eine der Transporteinheiten (10) ein Halteelement (20) zur zeitweisen Fixierung zumindest einer der Leitungen (8) trägt und dass insbesondere alle Transporteinheiten (10) jeweils ein Halteelement (20) zur Fixierung zumindest einer der Leitungen (8) tragen.

2. Kabelverlegevorrichtung (2) nach Anspruch 1,
**dadurch gekennzeichnet,**
**dass** die Transporteinheiten (10) selbst in zwei linear unabhängige Richtungen verfahrbar sind, wobei insbesondere jede Transporteinheit (10) unabhängig von den übrigen und relativ zu den übrigen Transporteinheiten (10) in diese zwei linear unabhängigen Richtungen (A,B) verfahrbar ist.

3. Kabelverlegevorrichtung (2) nach einem der Ansprüche 1 bis 2,
**dadurch gekennzeichnet,**
**dass** die Steuervorrichtung (14) derart eingerichtet ist, dass im Zuge der Ausführung eines Steuerprogramms zumindest eine Transporteinheit (10) automatisiert von einer vorgegebenen Startposition zu einer vorgegebenen Endposition verfährt und dass insbesondere mehrere Transporteinheiten (10) im Zuge der Ausführung des Steuerprogramms automatisiert jeweils von einer vorgegebenen Startposition zu einer vorgegebenen Endposition verfahren.

4. Kabelverlegevorrichtung (2) nach Anspruch 3,
**dadurch gekennzeichnet,**
**dass** die Steuervorrichtung (14) zur Ausführung mehrerer unterschiedlicher Steuerprogramme eingerichtet ist, wobei für jeden Typ Kabelbaum (4) ein spezifisches Steuerprogramm hinterlegt ist und wobei die jeweiligen vorgegebenen Endpositionen der Transporteinheiten (10) von Steuerprogramm zu Steuerprogramm varlleren.

5. Kabelverlegevorrichtung (2) nach Anspruch 3 oder 4,
**dadurch gekennzeichnet,**
**dass** die vorgegebene Startposition zumindest einer der Transporteinheiten (10) im Randbereich (12) der Verlegeebene (6) liegtund dass insbesondere die vorgegebenen Startpositionen aller Transporteinheiten (10) im Randbereich (12) der Verlegeebene (6) liegen,

6. Kabelverlegevorrichtung (2) nach einem der Ansprüche 3 bis 5,
**dadurch gekennzeichnet,**
**dass** die Steuervorrichtung (14) derart eingerichtet ist, dass im Zuge der Ausführung eines Steuerprogramms zumindest eine der Transporteinheiten (10) entlang einer vorgegebenen Bahn von einer vorgegebenen Startposition zu einer vorgegebenen Endposition verfahren wird, wobei die Bahn insbesondere entlang eines Teils eines vorgesehenen Verlegeweges oder entlang eines vorgesehenen Verlegewegs einer der Leitungen (8) eines Kabelbaums (4) verläuft.

7. Kabelverlegevorrichtung (2) nach einem der Ansprüche 1 bis 6,
**dadurch gekennzeichnet,**
**dass** die Transporteinheiten (10) mittels eines Führungsrasters (18) zwangsgeführt sind.

8. Kabelverlegevorrichtung (2) nach einem der Ansprüche 1 bis 7,
**dadurch gekennzeichnet,**
**dass** die Transporteinheiten (10) frei verfahrbar sind.

9. Kabelverlegevorrichtung (2) nach einem der Ansprüche 1 bis 8,
**dadurch gekennzeichnet,**
**dass** die Transporteinheiten (10) mit Hilfe eines elektromagnetischen Antrlebssystems verfahrbar sind, wobei das Antriebssystem zur Erzeugung von entlang der Kabelverlegevorrichtung wandernder Magnetfelder zum Verfahren der Transporteinheiten (10) ausgebildet ist.

10. Kabelverlegevorrichtung (2) nach einem der Ansprüche 1 bis 9,
**dadurch gekennzeichnet,**
**dass** die Transporteinheiten (10) in einer Transportebene (26) verfahrbar sind, die zur Verlegeebene (6) versetzt und insbesondere parallel dazu angeordnet ist.

11. Verfahren zur Fertigung von Kabelbäumen (4) unterschiedlicher Typen mittels einer Kabelverlegevorrichtung (2), wobei die Kabelverlegevorrichtung (2) eine Verlegeebene (6) zur Positionierung von Leitungen (8) eines Kabelbaums (4), eine Anzahl von Transporteinheiten (10) sowie eine Steuervorrichtung (14), die zur Steuerung der Transporteinheiten (10) eingerichtet ist, aufweist,, wobei eine Anzahl von Transporteinheiten (10) gesteuert durch die Steuervorrichtung (14) zumindest teilautomatisiert verfahren wird
**dadurch gekennzeichnet,**
**dass** zumindest eine der Transporteinheiten (10) ein Halteelement (20) zur zeitweisen Fixierung zumindest einer der Leitungen (8) trägt und dass Insbesondere alle Transporteinheiten (10) jeweils ein Halteelement (20) zur Fixierung zumindest einer der Leitungen (8) tragen,

12. Verfahren nach Anspruch 11,
**dadurch gekennzeichnet,**
**dass** die Transporteinheiten (10) selbst in zwei linear unabhängige Richtungen verfahrbar sind, wobei insbesondere jede Transporteinheit (10) unabhängig von den übrigen und relativ zu den übrigen Transporteinheiten (10) in diese zwei linear unabhängigen Richtungen (A,B) verfahren wird.

13. Verfahren nach Anspruch 11 oder 12,
**dadurch gekennzeichnet,**
**dass** die Kabelverlegevorrichtung (2) vor dem Zusammensetzen von Einzelteilen zur einer Fertigung eines Kabelbaums (4) eines Typs für den entsprechenden Typ Kabelbaum (4) konfiguriert wird, indem mehrere Transporteinheiten (10) gesteuert durch die Steuervorrichtung (14) jeweils von einer vorgegebenen Startposition zu einer vorgegebenen Endposition verfahren werden, wobei die vorgegebenen Endpositionen der Transporteinheiten (10) die vorgegebene Geometrie des entsprechenden Typs Kabelbaum (4) wiederspiegeln.

14. Verfahren nach einem der Ansprüche 11 bis 13,
**dadurch gekennzeichnet,**
**dass** im Zuge einer Fertigung eines Kabelbaums (4) zumindest eine der Transporteinheiten (10) zur Positionierung einer Leitung (8) des Kabelbaums (4) in der Verlegeebene (6) entlang einer vorgegebenen Bahn von einer vorgegebenen Startpositionzu einer vorgegebenen Endposition verfahren wird, wobei die Bahn entlang eines Teils eines vorgesehenen Verlegeweges oder entlang des vorgesehenen Verlegeweges der Leitung (8) im fertigen Kabelbaum (4) verläuft und wobei die Transporteinheit (10) dabei zumindest ein Ende (22) der Leitung (8) mitführt.

## Claims

1. A cable laying device (2) for the production of cable harnesses (4) of different types, comprising a laying plane (6) for positioning of lines (8) of a cable harness (4), as well as a number of transport units (10) that are movable in an at least partially automated manner relative to the laying plane (6), and a control device (14) configured for controlling the transport units (10),
**characterised,**
**in that** at least one of the transport units (10) carries a retention element (20) for temporarily fixing at least one of the lines (8), and in that in particular all transport units (10) each carry a retention element (20) for fixing at least one of the lines (8).

2. The cable laying device (2) according to claim 1,
**characterised,**
**in that** the transport units (10) are movable even in two linearly independent directions, wherein in particular each transport unit (10) is movable in those two linearly independent directions (A, B) independently from the other and relative to the other transport units (10).

3. The cable laying device (2) according to any one of claims 1 to 2,
**characterised,**
**in that** the control device (14) is configured, such that, during execution of a control program, at least one transport unit (10) moves in an automated manner from a predetermined start position to a predetermined end position and in that, during the execution of the control program, in particular several transport units (10) each move in an automated manner from a predetermined start position to a predetermined end position.

4. The cable laying device (2) according to claim 3,
**characterised,**
**in that** the control device (14) is configured for execution of several different control programs, wherein a specific control program is stored for each type of cable harness (4), and wherein the respective predetermined end positions of the transport units (10) vary from control program to control program.

5. The cable laying device (2) according to claim 3 or 4,
**characterised,**
**in that** the predetermined start position of at least one of the transport units (10) is located in an edge region (12) of the laying plane (6), and in that in particular the predetermined start position of all transport units (10) is located in the edge region (12) of the laying plane (6).

6. The cable laying device (2) according to any one of claims 3 to 5,
**characterised,**
**in that** the control device (14) is configured, such that, during execution of a control program, at least one of the transport units (10) is moved along a predetermined track from a predetermined start position to a predetermined end position, wherein the track in particular extends along a portion of a provided laying path or along a provided laying path of one of the lines (8) of a cable harness (4).

7. The cable laying device (2) according to any one of claims 1 to 6,
**characterised,**
**in that** the transport units (10) are force-guided by means of a guiding grid (18).

8. The cable laying device (2) according to any one of claims 1 to 7,
**characterised,**
**in that** the transport units (10) are freely movable.

9. The cable laying device (2) according to any one of claims 1 to 8,
**characterised,**
**in that** the transport units (10) are movable with the help of an electromagnetic drive system, wherein the drive system is adapted for generation of magnetic fields, which travel along the cable laying device, for moving the transport units (10).

10. The cable laying device (2) according to any one of claims 1 to 9,
**characterised,**
**in that** the transport units (10) are movable in a transport plane (26), which is arranged offset relative to the laying plane (6) and in particular parallel thereto.

11. A method for the production of cable harnesses (4) of different types by means of a cable laying device (2), wherein the cable laying device (2) comprises a laying plane (6) for positioning of lines (8) of a cable harness (4), a number of transport units (10), as well as a control device (14) configured for controlling the transport units (10), wherein a number of transport units (10) controlled by the control device (14) is moved in an at least partially automated manner,
**characterised,**
**in that** at least one of the transport units (10) carries a retention element (20) for temporarily fixing at least one of the lines (8) and in that in particular all transport units (10) each carry a retention element (20) for fixing at least one of the lines (8).

12. The method according to claim 11,
**characterised,**
**in that** the transport units (10) are movable even in two linearly independent directions, wherein in particular each transport unit (10) is movable in those two linearly independent directions (A, B) independently from the other and relative to the other transport units (10).

13. The method according to claim 11 or 12,
**characterised,**
**in that**, prior to the assembly of individual components, the cable laying device (2) is configured for the production of a cable harness (4) of a type for a corresponding type of cable harness (4), by moving several transport units (10) each controlled by the control device (14) from a predetermined start position to a predetermined end position, wherein the predetermined end positions of the transport units (10) reflect a predetermined geometry of the corresponding type of cable harness (4).

14. The method according to any one of claims 11 to 13,
**characterised,**
**in that**, during the production of a cable harness (4), at least one of the transport units (10) is moved along a predetermined track from a predetermined start position to a predetermined end position for positioning of a line (8) of the cable harness (4) in the laying plane (6), wherein the track extends along a portion of a provided laying path or along the provided laying path of the line (8) in the completed cable harness (4), and wherein the transport unit (10) thereby carries along at least one end (22) of the line (8).

## Revendications

1. Dispositif de pose (2) de câbles pour la fabrication de faisceaux de câbles (4) de différents types, comportant un plan de pose (6) destiné au positionnement de lignes (8) d'un faisceau de câbles (4), ainsi qu'un certain nombre d'unités de transport (10) qui sont déplaçables de manière au moins partiellement automatisée relativement au plan de pose (6), et un dispositif de commande (14) qui est conçu pour la commande des unités de transport (10).
**caractérisé en ce**
**qu'**au moins une des unités de transport (10) porte un élément de maintien (20) destiné à la fixation temporaire d'au moins une des lignes (8) et en ce qu'en particulier toutes les unités de transport (10) portent chacune un élément de maintien (20) destiné à la fixation d'au moins l'une des lignes (8).

2. Dispositif de pose (2) de câbles selon la revendication 1,
**caractérisé en ce que**
les unités de transport (10) sont elles-mêmes déplaçables dans deux directions linéairement indépendantes, en particulier chaque unité de transport (10) étant déplaçable, indépendamment des autres et relativement aux autres unités de transport (10), dans deux directions (A,B) linéairement indépendantes.

3. Dispositif de pose (2) de câbles selon l'une quelconque des revendications 1 et 2,
**caractérisé en ce que**
le dispositif de commande (14) est conçu de telle façon qu'au cours de l'exécution d'un programme de commande au moins une unité de transport (10) se déplace de façon automatisée d'une position initiale préétablie à une position finale préétablie et **en ce qu'**en particulier plusieurs unités de transport (10) au cours de l'exécution du programme de commande se déplacent de façon automatisée chacune d'une position initiale préétablie à une position finale préétablie.

4. Dispositif de pose (2) de câbles selon la revendication 3,
**caractérisé en ce que**
le dispositif de commande (14) est conçu pour l'exécution de plusieurs programmes de commande différents, un programme de commande spécifique étant enregistré pour chaque type de faisceau de câbles (4) et les positions finales préétablies respectives des unités de transport (10) variant de programme de commande à programme de commande.

5. Dispositif de pose (2) de câbles selon la revendication 3 ou 4,
**caractérisé en ce que**
la position initiale préétablie d'au moins une des unités de transport (10) se trouve dans la zone de bord (12) du plan de pose (6) et **en ce qu'**en particulier les positions initiales préétablies de toutes les unités de transport (10) se trouvent dans la zone de bord (12) du plan de pose (6).

6. Dispositif de pose (2) de câbles selon l'une quelconque des revendications 3 à 5,
**caractérisé en ce que**
le dispositif de commande (14) est conçu de telle façon qu'au cours de l'exécution d'un programme de commande au moins une des unités de transport (10) est déplacée, le long d'un parcours préétabli, d'une position initiale préétablie à une position finale préétablie, le parcours s'étendant en particulier le long d'une partie d'une voie de pose prévue ou le long d'une voie de pose prévue de l'une des lignes (8) d'un faisceau de câbles (4).

7. Dispositif de pose (2) de câbles selon l'une quelconque des revendications 1 à 6,
**caractérisé en ce que**
les unités de transport (10) sont soumises à un guidage forcé au moyen d'une grille de guidage (18).

8. Dispositif de pose (2) de câbles selon l'une quelconque des revendications 1 à 7,
**caractérisé en ce que**
les unités de transport (10) sont déplaçables librement.

9. Dispositif de pose (2) de câbles selon l'une quelconque des revendications 1 à 8,
**caractérisé en ce que**
les unités de transport (10) sont déplaçables à l'aide d'un système d'entraînement électromagnétique, le système d'entraînement étant configuré pour la production de champs magnétiques se propageant le long du dispositif de pose de câbles pour le déplacement des unités de transport (10).

10. Dispositif de pose (2) de câbles selon l'une quelconque des revendications 1 à 9,
**caractérisé en ce que**
les unités de transport (10) sont déplaçables dans un plan de transport (26) qui est disposé en étant décalé par rapport au plan de pose (6) et en particulier en étant parallèle à ce dernier.

11. Procédé pour la fabrication de faisceaux de câbles (4) de différents types au moyen d'un dispositif de pose (2) de câbles, le dispositif de pose (2) de câbles comportant un plan de pose (6) destiné au positionnement de lignes (8) d'un faisceau de câbles (4), un certain nombre d'unités de transport (10) ainsi qu'un dispositif de commande (14) qui est conçu pour la commande des unités de transport (10), un certain nombre d'unités de transport (10) étant déplacées de manière au moins partiellement automatisées sous commande par le dispositif de commande (14)
**caractérisé en ce**
**qu'**au moins une des unités de transport (10) porte un élément de maintien (20) destiné à la fixation temporaire d'au moins une des lignes (8) et en ce qu'en particulier toutes les unités de transport (10) portent chacune un élément de maintien (20) destiné à la fixation d'au moins l'une des lignes (8).

12. Procédé selon la revendication 11,
**caractérisé en ce que**
les unités de transport (10) sont elles-mêmes déplaçables dans deux directions linéairement indépendantes, en particulier chaque unité de transport (10) étant déplaçable indépendamment des autres et relativement aux autres unités de transport (10) dans deux directions (A,B) linéairement indépendantes.

13. Procédé selon la revendication 11 ou 12,
**caractérisé en ce que**
le dispositif de pose (2) de câbles est configuré, avant l'assemblage de pièces individuelles, pour une fabrication d'un faisceau de câbles (4) d'un type pour le type correspondant de faisceau de câbles (4), par le fait que plusieurs unités de transport (10) sont déplacées sous commande par le dispositif de commande (14) chacune d'une position initiale préétablie à une position finale préétablie, les positions finales préétablies des unités de transport (10) reflétant la géométrie préétablie du type correspondant de faisceau de câbles (4).

14. Procédé selon l'une quelconque des revendications 11 à 13,
**caractérisé en ce**
**qu'**au cours d'une fabrication d'un faisceau de câbles (4) au moins une des unités de transport (10) est déplacée pour le positionnement d'une ligne (8) du faisceau de câbles (4), dans le plan de pose (6) le long d'un parcours préétabli, d'une position initiale préétablie à une position finale préétablie, le parcours s'étendant le long d'une partie d'une voie de pose prévue ou le long de la voie de pose prévue de la ligne (8) dans le faisceau de câbles (4) fini et l'unité de transport (10) entraînant en même temps au moins une extrémité (22) de la ligne (8).
